# EUROPÄISCHE PATENTSCHRIFT

(11) **EP 1 481 101 B1**
(45) Veröffentlichungstag und Bekanntmachung des Hinweises auf die Patenterteilung: **12.08.2009**
(21) Anmeldenummer: 03706351.8
(22) Anmeldetag: 09.01.2003
(51) Int. Cl.: C21C 5/56, C21B 13/02, C21B 13/14

(54) **VERFAHREN UND VORRICHTUNG ZUR KONTINUIERLICHEN STAHLHERSTELLUNG UNTER EINSATZ VON METALLISCHEN EINSATZMATERIALIEN**
METHOD AND DEVICE FOR THE CONTINUOUS PRODUCTION OF STEEL USING METAL CHARGE MATERIAL
PROCEDE ET DISPOSITIF DE PRODUCTION D'ACIER EN CONTINU FAISANT APPEL A DES MATIERES DE CHARGE METALLIQUES

(30) Priorität: 12.02.2002 DE 10205660
(43) Veröffentlichungstag der Anmeldung: 01.12.2004
(73) Patentinhaber: SMS Siemag AG, 40237 Düsseldorf (DE)
(72) Erfinder: MONHEIM, Peter, 46284 Dorsten (DE); REICHELT, Wolfgang, 47447 Moers (DE); WEISCHEDEL, Walter, 40670 Meerbusch (DE)
(74) Vertreter: Klüppel, Walter
(86) Internationale Anmeldenummer: PCT/EP2003/000123
(87) Internationale Veröffentlichungsnummer: WO 2003/068995

(56) Entgegenhaltungen:
- WO-A-01/18259
- DE-C- 101 952
- DE-U- 8 437 922
- LIUYI ZHANG ET AL: "SIMULATIONSMODELL ZUR BERECHNUNG DER SCHROTTVORWARMUNG MIT GESTUFTER NACHVERBRENNUNG" STAHL UND EISEN, VERLAG STAHLEISEN GMBH. DUSSELDORF, DE, Bd. 115, Nr. 5, 15. Mai 1995 (1995-05-15), Seiten 75-82, XP000511498 ISSN: 0340-4803 in der Anmeldung erwähnt
- LANGHAMMER, H.-J. E.A.: "Entwicklung eines kontinuierlichen Einschmelzverfahrens" STAHL UND EISEN, Bd. 92, Nr. 11, 25. Mai 1972 (1972-05-25), Seiten 501-518, XP002239204 in der Anmeldung erwähnt

## Beschreibung

Die Erfindung betrifft ein Verfahren zur kontinuierlichen Stahlherstellung unter Einsatz von metallischen Einsatzmaterialien, wie Schrott, Eisenschwamm oder dergleichen, wobei die Einsatzmaterialien in einem oberen Teil eines Einschmelzgefäßes vorgewärmt werden, anschließend in einem unteren Teil des Einschmelzgefäßes mit fossilen Brennstoffen geschmolzen werden und wobei das Schmelzgut kontinuierlich in ein Behandlungsgefäß abgeführt wird, in dem die gewünschte Stahlqualität eingestellt wird, wobei in das Einschmelzgefäß von außen Gase zur Nachverbrennung der Prozessgase eingeführt werden.

Zudem betrifft die Erfindung eine Vorrichtung zur kontinuierlichen Herstellung von Stahl unter Einsatz von metallischen Einsatzmaterialien, umfassend ein Einschmelzgefäß mit mindestens einer die metallischen Einsatzmaterialien in einem unteren Teil des Einschmelzgefäßes beaufschlagbaren Brennereinrichtung für fossile Brennstoffe sowie ein mit dem unteren Teil des Einschmelzgefäßes über eine Abstichöffnung verbundenes Behandlungsgefäß, in das das Schmelzgut kontinuierlich abgeführt wird und in dem dem die gewünschte Stahlqualität eingestellt wird, wobei die Einsatzmaterialien in einem oberen Teil des Einschmelzgefäßes mittels der Prozessgase vorgewärmt werden und in das Einschmelzgefäß von außen Gase zur Nachverbrennung der Prozessgase eingeführt werden. In dem Behandlungsgefäß wird die Eisenschmelze zur Stahlherstellung insbesondere überhitzt und eine Legierungsbehandlung durchgeführt.

Ein solches Verfahren und eine solche Vorrichtung sind aus der DT 2 325 593 bekannt. Es wird ein Verfahren zur kontinuierlichen Herstellung von Stahl mit Einsatzmaterialien, wie Schrott, Eisenschwamm oder dergleichen beschrieben, die in einem Schachtofen als Einschmelzgefäß kontinuierlich von unten durch eine Brennerlanze aufgeschmolzen werden und die Schmelze in ein beheiztes Durchlaufgefäß gefüllt wird, in dem kontinuierlich eine Schlackenabscheidung erfolgt, und wobei das im Gefäß befindliche Material überhitzt und durch Zugabe entsprechender Legierungs- und Desoxidationszuschläge die gewünschte Stahlanalyse eingestellt wird. Hierbei werden die Überhitzung und Schlackenreduktion elektrisch vorgenommen. Das Durchlaufgefäß wird hierzu induktiv beheizt oder mittels eines Lichtbogens. In den Schachtofen wird mit Hilfe einer Lanzenführung ein lanzenförmiger Öl-Sauerstoffbrenner in das Innere des Einschmelzgefäßes in vertikaler Richtung beweglich eingeführt, wobei die von dem Brenner erzeugte Flamme das Einsatzmaterial von unten beaufschlagt und kontinuierlich aufschmilzt. Durch einen Ringspalt im Mantel des Schachtofens kann Luft zur Nachverbrennung der Einschmelzabgase eingeführt werden, die zur Vorwärmung des einzuschmelzenden Materials dienen. Das Einschmelzgefäß ist im Inneren im wesentlichen zylinderförmig und kann einen sich nach unten leicht vergrößernden Durchmesser aufweisen.

In Stahl und Eisen, 92 (1972), Nr. 11, S. 501 ist dieses kontinuierliche Einschmelzverfahren von Schrott nach dem Gegenstromprinzip ebenfalls beschrieben. Bei dieser Arbeitsweise wird eine Schrottsäule von unten mit einem Erdöl/Sauerstoff-Brenner aufgeschmolzen. Das geschmolzene Metall läuft zusammen mit der gebildeten Eisenoxidschlacke kontinuierlich aus dem Einschmelzgefäß heraus. Gleichzeitig wird die Schrottsäule durch laufendes Nachsetzen aufgefüllt. Hierbei erweist sich als problematisch, dass zwar die fühlbare Wärme genutzt wird, der Anteil an chemisch gebundener Abgaswärme für das Vorwärmen aber ungenutzt bleibt. Zudem ist das Verfahren mit dem Problem einer hohen Eisenverschlackung durch Verwendung fossiler Brennmaterialien in Kombination mit Sauerstoff verbunden.

Eine hierzu andere Entwicklungsrichtung ist in Stahl und Eisen 115 (1995) Nr. 5, S. 75 beschrieben. Hierbei wird Schrott in einer Vorwärmsäule vorgewärmt und in einem Eisenbadreaktor eingeschmolzen. Das Vorheizen kann entweder im Eisenbadreaktor selbst zeitlich vor dem Einschmelzen erfolgen, oder der Schrott wird in einem oberhalb des Einschmelzreaktors angeordneten Korb vorgeheizt und anschließend in den Reaktor fallen gelassen. Beim Einschmelzen wird Kohle zusammen mit Sauerstoff in das Eisenbad geblasen, wobei die Abgase oberhalb der Schmelze im Reaktor noch nachverbrannt werden können. Um eine Oxidation des Schrotts bei der Vorwärmung zu minimieren, wird das Heizgas beim Vorheizen stufenweise verbrannt.

Aufgabe der vorliegenden Erfindung ist es, ein gattungsgemäßes Verfahren bzw. eine gattungsgemäße Vorrichtung bei einer Schmelzenergieeinbringung durch fossile Brennstoffe und bei Nutzung auch der chemischen Abgaswärme zur Vorwärmung des Einsatzmaterials zu optimieren.

Diese Aufgabe wird durch das Verfahren mit den Merkmalen des Anspruchs 1 sowie durch eine Vorrichtung mit den Merkmalen des Anspruchs 13 gelöst. Vorteilhafte Weiterentwicklungen sind in den Unteransprüchen sowie in der Beschreibung der Ausführungsbeispiele dargestellt.

Verfahrensgemäß werden die Prozessgase beim Aufsteigen im Einschmelzgefäß stufenweise in übereinander angeordneten Nachverbrennungsebenen (E1-E4) nachverbrannt, wobei hierzu neben den von außen in die Einsatzmaterialsäule eingebrachten Nachverbrennungsgasen auch in das Innere der Einsatzmaterialsäule Nachverbrennungsgase, d.h. Oxydatoren wie Sauerstoff, Luft oder eine Mischung hiervon, durch einen in die Materialsäule hineinragenden Innenschacht eingeführt bzw. eingedüst werden.

Durch die Kombination eine stufenweisen Nachverbrennung mit dem Einbringen von Nachverbrennungsgasen sowohl von außen als auch von innen in die Einsatzmaterialsäule wird eine optimale Nachverbrennung bei geringer Oxidation des Einsatzmaterials und damit ein hoher Wirkungsgrad bei der Ausnutzung der chemischen Wärme der Abgase erreicht. Aufgrund des Innenschachtes kann fossile Energie effektiv in die Einsatzmaterialsäule eingebracht werden, so dass eine günstige Wärmeübertragung und geringere Eisenoxydation erreicht werden. Das Nachverbrennungsgas muss nur kurze Wege für eine Vermischung und damit Nachverbrennung der Prozessgase zurücklegen.

Vorteilhafterweise werden die Menge, Art und/oder Zusammensetzung der Nachverbrennungsgase in Abhängigkeit der Eigenschaften der Prozessgase über die Höhe des Einschmelzgefäßes, vorzugsweise in jeder oder den meisten Nachverbrennungsebenen, und der gewollten Nachverbrennungsgrade in einer bestimmten Höhe eingestellt, beispielsweise durch entsprechende Dosierung und Mischung von Luft und Sauerstoff. Ebenfalls wird vorgeschlagen, die Nachverbrennung unter anderem durch Einstellung der Menge, Art und/oder Zusammensetzung der Oxydatoren und der fossilen Brennstoffe sowie durch die Position der Brennerenrichtung im Verhältnis zum Innenschaft zu beeinflussen.

Insbesondere wird vorgeschlagen, die Nachverbrennungsebenen durch Veränderung der Anordnung des Innenschachtes zum Einschmelzgefäß in der Höhe und/oder durch Drehung des Innenschachtes um seine Längsachse einzustellen. Auf diese Weise können die Nachverbrennungsebenen, die durch den Eintritt von Nachverbrennungsgasen von außen und innen gebildet werden, variabel zueinander eingestellt werden.
Nach einer besonders bevorzugten Weiterentwicklung der Erfindung wird mindestens ein Teil der nachzuverbrennenden Prozessgase aus der Einsatzmaterialsäule abgezogen und deren Nachverbrennung außerhalb der Einsatzmaterialsäule, insbesondere außerhalb des Einschmelzgefäßes, durchgeführt. Die nachverbrannten Prozessgase werden anschließend wieder in die Einsatzmaterialsäule über eine höher liegenden Ebene als die Abzugsebene zurückgeführt.

Die Nachverbrennung findet in entsprechenden von der Materialsäule getrennten Verbrennungsräumen statt, in die die Nachverbrennungsgase eingeführt werden. Hierzu münden Zuführleitungen für die Nachverbrennungsgase in die Verbrennungsräume, wobei das Nachverbrennungsgas mit den durch die Verbrennungsgase zirkulierenden Prozessgasen in Kontakt kommt. Besonders vorteilhaft ist ein Einführen der Nachverbrennungsgase mit einer Injektor-Wirkung aufgrund eines Mitnahme-Effektes.

Vorrichtungsgemäß weist das Einschmelzgefäß mittig einen hohlen Innenschacht auf, der längs der Längsachse des Einschmelzgefäßes in dieses von oben hineinragt. Auf diese Weise entsteht ein Ringschacht-Ofen. Der Innenschacht umfasst in die Wandung des Innenschachtes eingebrachte Eintrittsöffnungen für Nachverbrennungsgase, die entlang des Innenschaftmantels übereinander angeordnet sind und die übereinander angeordnete Nachverbrennungsebenen bilden. Die Eintrittsöffnungen sind insbesondere mit separaten Zuführgasleitungen verbunden. Auf diese Weise wird erreicht, die Nachverbrennungsgase bzw. Oxydatoren von innen in das Einsatzmaterial Schrottsäule entsprechend der gewollten Nachverbrennungsverteilung einzubringen.

Vorzugsweise sind Meßeinrichtungen zur Bestimmung der Prozessgaseigenschaften über die jeweilige Höhe des Einschmelzgefäßes, vorzugsweise an jeder oder ausgewählten Nachverbrennungsebene, und Mittel zur entsprechenden Einstellung der Art, Menge und/oder Zusammensetzung der eintretenden Gase zur Nachverbrennung vorgesehen.

Es wird vorgeschlagen, dass die auf einer jeweiligen Ebene angeordneten Eintrittsöffnungen im Einschmelzgefäß im Verhältnis zu zwei untereinander angeordneten Ebenen von Eintrittsöffnungen des Innenschachtes versetzt angeordnet sind, d.h., es werden abwechselnd jeweils durch die Innenschacht-Eintrittsöffnungen und die Eintrittsöffnungen in der Gefäßwand übereinander angeordnete Nachverbrennungsebenen gebildet, die durch Verstellen des Innenschachtes zum Einschmelzgefäß variierbar sind. Auf diese Weise sind nicht nur Art/Menge und Zusammensetzung der Nachverbrennungsgase einstellbar, sondern auch die Nachverbrennungsebenen.

Nach einer besonders bevorzugten Ausführungsform werden nicht nur die bei der Einschmelzung entstehenden Prozessgase zur Nutzung der chemischen Energie nachverbrannt, sondern auch die bei der Bearbeitung der Schmelze im Behandlungsgefäß gebildeten Prozessgase. Hierzu sind die Gasräume der beiden Gefäßes miteinander gasdicht verbunden.

Der Energieeinsatz erfolgt überwiegend mittels fossiler Brennstoffe in Kombination mit Oxydatoren, wie beispielsweise ein Ergas bzw. Erdöl/SauerstoffGemisch, ohne Umwandlung in elektrische Form. Hierbei soll auch das Behandlungsgefäß wenigstens zu einem Teil mittels fossiler Energie betrieben werden, der andere Teil wird durch elektrische Energie bereitgestellt.

Um die unerwünschte Oxidation der eisenhaltigen Einsatzmaterialien während einer Nachverbrennung noch weiter zu reduzieren, soll mindestens einen Teil, vorzugsweise einen großen Teil, der Nachverbrennung der Gase an einem von der Einsatzmaterialsäule räumlich getrennten Ort durchgeführt werden und zwar in den Nachverbrennungs- bzw. Zwischenräumen, die in die Gefäßwand des Einschmelzgefäßes oder außerhalb des Einschmelzgefäßes und/oder in dem Innenschacht integriert sind und in die die Zuführleitungen für Nachverbrennungsgase münden und in denen das aus den Eintrittsöffnungen austretende Gas zur Unterstützung der Nachverbrennung mit dem in den Zwischenraum zirkulierenden Abgasen in Kontakt kommt. Vorzugsweise können diese Zwischenräume auch im Mündungsbereich der Eintrittsöffnungen in der Wandung des Innenschaftes vorgesehen sein. Die Nachverbrennung der Abgase in den von der Schrottsäule abgetrennten Verbrennungsräumen hat zudem den Vorteil, dass der Schrott nicht überhitzt wird. Nach einer besonders bevorzugten Ausführungsform erstreckt sich ein Verbrennungsraum ringförmig um das Einschmelzgefäß. Alternativ können mehrere unabhängige, insbesondere auf gleicher Höhe nebeneinander angeordnete Räume vorgesehen sein. Nach einer anderen Ausführungsform sind die Verbrennungsräume als Leitungen ausgebildet, in die das Prozessgas auf einer (unteren) Ebene eingesogen wird und die das nachverbrannte Prozessgas auf einer höher gelegenen Ebene wieder in den Schacht leiten. Der Absaugeffekt ist dadurch begründet, dass der Strömungswiderstand durch die Materialsäule für die Prozessgase höher ist als derjenige durch die Leitungen.

Weitere Einzelheiten und Vorteile der Erfindung ergeben sich aus den Unteransprüchen und aus der nachfolgenden Beschreibung, in der die in den Figuren dargestellten Ausführungsformen der Erfindung näher erläutert werden. Dabei sind neben den oben aufgeführten Kombinationen von Merkmalen auch Merkmale alleine oder in anderen Kombinationen erfindungswesentlich. Es zeigen:
- Fig. 1: eine teilweise geschnittene Seitenansicht auf eine erfindungsgemäße Vorrichtung zur Herstellung von Stahl mit einem Einschmelzgefäß und einem Behandlungsgefäß;
- Fig. 2: eine Teilansicht von Fig. 1 zur Darstellung der Mess- und Reglungstechnik zur Durchführung der stufenweisen Nachverbrennung;
- Fig. 3: einen Querschnitt durch das Einschmelzgefäß mit Innenschacht;
- Fig. 4: eine Schnittansicht einer bevorzugten Ausführungsform des Einschmelzgefäßes mit einem ringförmigen Verbrennungsraum;
- Fig. 5: eine Detailansicht der Fig. 4.

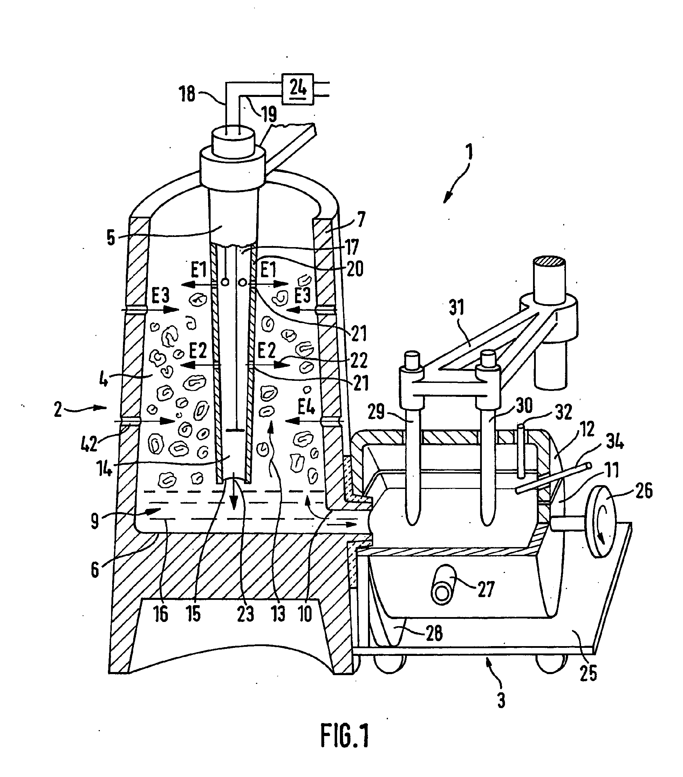

Fig. 1 zeigt eine Vorrichtung 1 zur kontinuierlichen Herstellung von Stahl unter Einsatz von metallischen Einsatzmaterialien, insbesondere von Schrott. Sie besteht aus einem Einschmelzgefäß 2 und einem neben diesem angeordneten Überhitzungs- und Behandlungsgefäß 3, d.h. einem Ofen, in dem eine Überhitzung der im Einschmelzgefäß 2 hergestellten Schmelze sowie Legierungseinstellungen des Stahls durchgeführt werden. Das Einschmelzgefäß 3 besteht aus einem Schacht 4, in den von oben gasdicht ein Innenschacht 5 nicht bis ganz zum unteren Teil 6, hier zum Boden, des Schachtes 4 hineinragt. Auf diese Weise entsteht ein Ringschachtofen. Das Einschmelzgefäß 3 wird nachfolgend als Schachtofen bezeichnet. In der gezeigten Ausführungsform ist die Gefäßwandung 7 des Schachtofens mindestens im Bereich der noch festen Schrottsäule mit einer nach unten aufweitenden Konizität geformt, während der Innenschacht 5 mit einer gegenüber dieser Form gegenläufigen Konizität geformt ist. Durch diesen sich aufweitenden Aufbau des Schachtofens wird erreicht, dass die Schrottsäule 8, die von oben chargiert wird, von oben nach unten beweglicher ist und durch den sich nach unten bildenden Freiraum ausreichend Schrott von oben nach unten nachrücken kann. Im Bereich des Aufschmelzens 9, d.h. im unteren Drittel des Schachtofens, kann der Schachtofen auch wieder zylindrisch oder mit einer gegenläufigen Konizität ausgeformt sein. Die gegenläufige Konizität des Innenschachtes 5 verstärkt diesen Freiraum nach unten; der Innenschacht kann aber auch zylindrisch geformt sein.

Der Schachtofen ist über eine im unteren Teil eingerichtete Abstichöffnung 10 und eine Feuerfestdichtung mit dem Behandlungsgefäß 3 verbunden. Dieses besteht in der hier gezeigten Ausführungsform im wesentlichen aus einem unteren Schmelzbad-Gefäßteil 11 und einem oberen Gefäßteil 12. Für den Prozess wird Schrott 8 von oben in den Schachtofen chargiert. Die Schrottsäule wird durch die gegenläufig strömenden heißen Abgase 13 aus dem Behandlungsgefäß 3 und dem Schachtofen vorgewärmt und im unteren Teil 9 des Schachtofens mittels einer Brenneinrichtung 14, die in der Spitze 15 des Innenschachtes 5 integriert ist, aufgeschmolzen. Die Schmelze 16 fließt kontinuierlich durch die Abstichöffnung 10 in den unteren Schmelzbad-Gefäßteil 11 des Behandlungsgefäßes 3 ab. In entgegengesetzer Richtung können Abgase aus dem Behandlungsgefäß 3 durch die Öffnung 10 oder eine separate Gasleitung in das Schmelzgefäß strömen.

Der Innenschacht 5, der mittig in die Schrottsäule 8 hineinragt, weist in seinem hohlen Innenraum 17 Zuführleitungen 18, 19 auf sowie in seiner Wandung 20 Eintrittöffnungen 21, um durch die Zuführleitungen 18 heran transportierte Nachverbrennungsgase bzw. Oxydatoren 22 gezielt aus dem Innenschacht 5 in die Schrottsäule 8 zu befördern. Die Eintrittsöffnungen 21 sind jeweils auf übereinander angeordneten Ebenen E1, E2 quer zur Längsachse des Innenschachtes 5 radial in der Innenschachtwandung 20 angeordnet und bilden auf diese Weise Nachverbrennungsebenen E1, E2, die durch die Strömung des Abgases sich zu Abschnitten vergrößern können. Es können ebenso mehrere Öffnungen, die unmittelbar übereinander angeordnet sind, zu einem Abschnitt angeordnet sein. Die durch den Schrott 8 strömenden heißen Abgase 13 werden entsprechend der jeweiligen Nachverbrennungsebene E1, E2 sowie des für die jeweilige Nachverbrennungsebene eingestellten Gemisches an Nachverbrennungsgasen 22 nachverbrannt.

Zusätzlich weist der Innenschacht 5 an seiner zum Boden 6 des Schachtofens 4 weisenden Spitze 15 die Brennereinrichtung 14 für fossile Brennstoffe 23 auf, die mittels einer separaten Zuführleitung 19 versorgt wird. Die fossilen Energieträger 23 sind vorzugsweise Gas/Öl, die mit Oxydanten (zum Beispiel Sauerstoff, Luft oder deren Gemische), über eine separate Leitung beigeführt, in der Brenneinrichtung gemischt und verbrannt werden. Vorzugsweise erfolgt die Verbrennung der fossilen Brennstoffe zur Aufschmelzung des Schrotts 8 unterstöchiometrisch. Auf diese Weise steht weniger Sauerstoff zur Verfügung, der das Eisen verschlacken könnte.

Aufgrund der Zuführung der die Nachverbrennung unterstützenden Gase 22 sowie der für das Einschmelzen notwendigen Brennstoffe 23 durch den Innenschacht 5 werden diese bereits vorgewärmt. Um den Vorwärmgrad zu erhöhen, kann ein Wärmeaustauschaggregat 24 außerhalb des Innenschachtes 5 angeordnet sein, in dem die Gase bzw. Brennstoffe 22, 23 mittels vorbeigeführten heißen Abgasen 13 vorgewärmt werden.

Nach Vorwärmen und Aufschmelzen des Schrotts 8 wird die Schmelze 16 kontinuierlich in das Behandlungsgefäß 3 überführt. Das Behandlungsgefäß 3 ist drehbar ausgeführt. Nach Abschluss der Bearbeitung des Stahls werden durch Drehung des Gefäßes um eine horizontal zum Boden 25 verlaufende Schwenkachse 26 zuerst die Schlacke, danach die Stahlschmelze über ein Abstichloch 27 im unteren Gefäßteil 11 abgestochen. Hierzu ist der untere Gefäßteil 11 in einer Drehvorrichtung 28 gelagert. Es kann mittels einer verfahrbaren Bodenplatte 25 an das Einschmelzgefäß 2 herangefahren werden. Bei der gezeigten Ausführungsform ist das Behandlungsgefäß 3 als Lichtbogenofen ausgebildet mit zwei Elektroden 29, 30, die über eine Haltevorrichtung 31 im Ofen positioniert sind. Die Energiezufuhr kann aber auch mit Drehstrom über drei Elektroden ausgeführt werden. Die notwendige Energie für die Bearbeitung der Schmelze kann auch über fossile Brennstoffe eingebracht werden. Das Behandlungsgefäß 3 wird durch ein oberes Gefäßteil 12 bzw. einen Deckel abgeschlossen. Im Deckel ist zur Durchführung der Überhitzung und Schaumbildung der Schlacke eine Lanze 32 für die Zugabe von Kohlenstoffträgern und/oder Sauerstoff oder Luft vorgesehen. Zudem weist das Gefäß 3 eine Beschickungsvorrichtung 34 auf zur Zugabe von Zuschlägen für die metallurgische Behandlung der Schmelze.

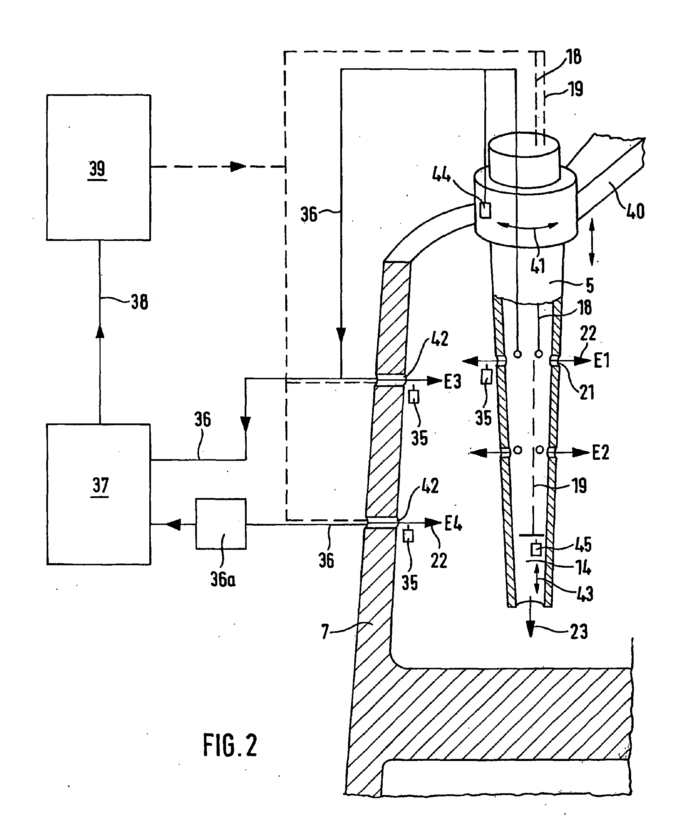

Die Positionierung der Nachverbrennungsebenen E1, E2 im Verhältnis zum Einschmelzgefäß und damit zu den Nachverbrennungsebenen E2, E4 sowie die Eigenschaften der austretenden Gase 22 werden in Abhängigkeit der Eigenschaften der Prozessgase über der Höhe des Einschmelzgefäßes in den jeweiligen Nachverbrennungsebenen gesteuert bzw. geregelt. Dies wird in Fig. 2 dargestellt. In jeder oder einzelnen ausgewählten Nachverbrennungsebenen sind Mittel 35 zur Bestimmung der jeweiligen Prozessgaseigenschaften in der jeweiligen Höhe des Einschmelzgefäßes angeordnet, die Gasproben nehmen und weiterführen oder die Zusammensetzung und die Temperatur der heißen Prozessgase bestimmen bzw. messen. In den Nachverbrennungsebenen genommene Prozessgasproben können in einem Analysegerät 36a analysiert werden. In Abhängigkeit dieser Ergebnisse, die über Meßleitungen 36 an eine Rechnereinheit 37 weitergegeben werden, werden die Eigenschaften der eintretenen Gase 22 für die Nachverbrennung berechnet und über Steuerleitungen 38 entsprechende Mittel 39 zur Einstellung aktiviert. Diese umfassen beispielsweise Dosierungs- und Mischvorrichtungen für Luft und Sauerstoff, d.h. einen Verteiler der Oxisationsmittel für die einzelnen Nachverbrennungsebenen.

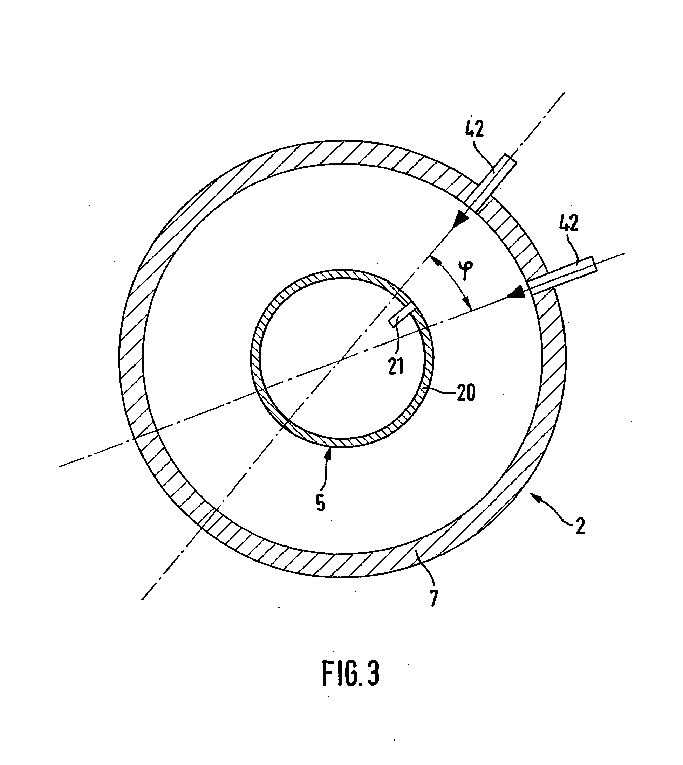

Die Beeinflussung der Nachverbrennung erfolgt neben der Einstellung der Parameter der Gase 22 auch durch Variation der Anordnung des Innenschachtes 5 zum Schachtofen oder durch Variation der Position des Brennereinrichtung 14 im Innenschacht 5. Der Innenschacht 5 ist mittels Verfahrmitteln bzw. einer Verfahreinrichtung 40 längs der Längsachse des Schachtofens verstellbar. Zudem können Drehmittel 41 vorhanden sein, so dass der Innenschacht 5 um seine Längsachse gedreht werden kann. Vorzugsweise ist der Innenschacht 5 drehbar bis zu einem Winkel von mindestens 0,5ϕ im Verhältnis zu dem Schachtofen (vgl. Fig. 3), um die Eintrittsöffnungen 21 im Innenschacht 5 im Verhältnis zu Eintrittsöffnungen 42 in der Gefäßwandung 7 des Außenschachtes günstig zu positionieren. Auf die Eintrittsöffnungen 42 wird weiter unten eingegangen. Die bzw. mehrere Brennereinrichtungen 14 sind jeweils innerhalb des Innenschachtes 5 mittels Verfahrmitteln 43 verstellbar.

Gleichzeitig sind Meßeinrichtungen 44 zur Erfassung der Position des Innenschachtes 5 im Verhältnis zum Schachtofen sowie Meßeinrichtungen 45 zur Erfassung der Position der Brennereinrichtung 14 im Innenschacht 5 vorgesehen. Auch diese Meßergebnisse werden zu der Rechnereinheit 37 geleitet und gehen in die Steuerung oder Regelung der Eigenschaften der Gase 22,23 zur Nachverbrennung durch entsprechenden Antrieb der Verfahr- bzw. Drehmittel 40, 41, 43 ein. Diese erfolgt vorzugsweise derart, dass in keiner Nachverbrennungsebene oder keinem -abschnitt ein lokales Überhitzen der Oberfläche des Schrotts oberhalb 90% der Schmelztemperatur von Eisenoxyd erreicht wird und der Nachverbrennungsgrad des aus dem Einschmelzgefäß austretenden Abgases annähernd 100% beträgt.

Neben den Eintrittsöffnungen 21 im Innenschaft 5 sind in der Gefäßwand 7 des Einschmelzgefäßes 4 Eintrittsöffnungen 42 angeordnet, die jeweils mit Zuführleitungen für Nachverbrennungsgase 22 verbunden sind. Hierbei sind die durch die Innenschacht-Eintrittsöffnungen 21 bzw. Gefäßwand-Eintrittsöffnungen 42 gebildeten Ebenen E1, E2 bzw. E3, E4 jeweils versetzt zueinander angeordnet, so dass jeweils von unten nach oben abwechselnd eine Nachverbrennungsebene mit Eintrittsöffnungen 42 von außen und eine Nachverbrennungsebene mit Eintrittsöffnungen 21 aus dem Innenschacht 5 von innen gebildet werden. Der Versatz beträgt hierbei bis zu 50% des Abstandes zwischen den Ebenen der Eintrittsöffnungen. Durch diese versetze Anordnung wird verhindert, dass es an einzelnen Stellen in der Schrottsäule 8 zu heiß wird, während andere Bereiche zu kalt bleiben, so dass keine Nachverbrennung stattfindet. Die Anordnung der äußeren und inneren Eindüsöffnungen bzw. -schlitze erfolgt derart, dass sich die Öffnungen nicht gegenseitig behindern, sondern durch ihre Anordnung zueinander eine günstige Gasverteilung in der Schrottsäule schaffen. Darüber hinaus verdeutlicht Fig. 3 eine bevorzugte Anordnung des Winkels der Öffnungen 21, 42 zueinander. Die Eintrittsöffnungen 42 in der Gefäßwand 7 des Einschmelzgefäßes 2 sind zu den im Innenschacht 5 angeordneten Eintrittsöffnungen 21 in einem Winkelversatz bis zu 0,5ϕ, vorzugsweise in einem Winkelversatz von 0,5ϕ, angeordnet, wobei ϕ der Winkel zwischen zwei nebeneinander angeordneten Eintrittsöffnungen 42 in einer Nachverbrennungsebene ist.

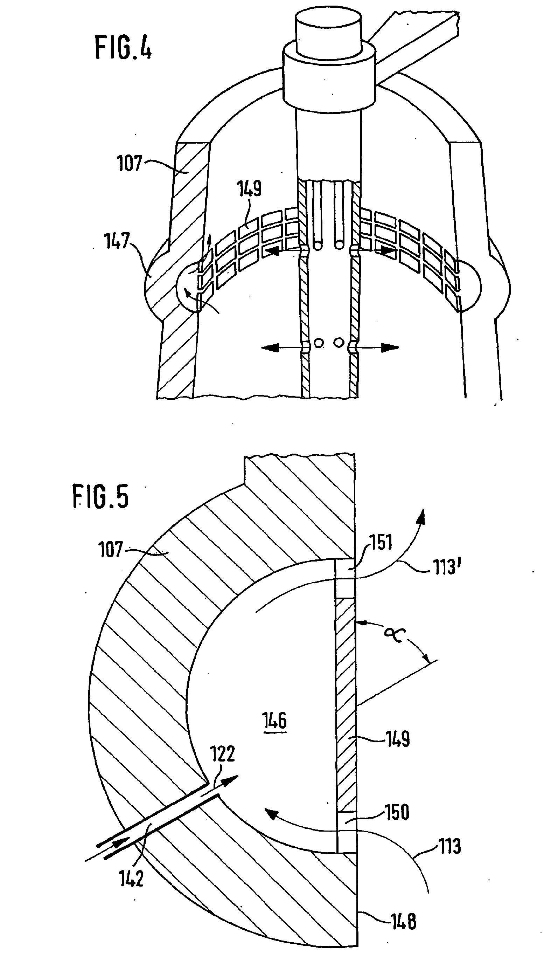

Nach einer besonders bevorzugten Ausführungsform, die mit den Fig. 4 und 5 verdeutlicht wird, ist die Gefäßwandung 107 des Schachtofens auf Höhe der Eintrittsöffnungen 142 mit einem ringförmigen Zwischen- oder Verbrennungsraum 146 versehen.

Dieser Verbrennungsraum 146 besteht in der gezeigten Ausführung aus einer nach außen gewölbten Ausstülpung 147 der Gefäßwandung 107, wobei der Innenraum des Verbrennungsraums 146 durch eine die Innenseite 148 der Gefäßwand 7 weiterführende Zwischenwand 149 von dem Innenraum des Schachtofens und damit von der Schrottsäule 8 abgegrenzt ist. Diese Zwischenwand 149 ist hierbei so an dem Verbrennungsraum 146 positioniert, dass unten ein Eintrittsbereich 150 für vorbeiströmende Prozessgase 113 und oben ein Austrittsbereich 151 für nachverbrannte Gase 113' entsteht. Auf diese Weise wird erreicht, dass die Prozessgase 113 durch den Verbrennungs- bzw. Zwischenraum 146 zirkulieren und die Nachverbrennung zu einem großen Teil in dem Verbrennungs- bzw. Zwischenraum 146 stattfindet. In Fig. 5 wird die Anordnung der Eintrittsöffnungen 142 in der Gefäßwand 107 des Schachtofens im Verhältnis zur Zwischenwand 149 verdeutlicht. Der sich durch die Mündung der Eintrittsöffnungen 142 bzw. -schlitzes ergebende Winkel α zwischen der Verlängerung der Mündungsgeraden zur Zwischenwand 149 kann Werte zwischen 90 und -90° annehmen. Vorzugsweise wird der Mündungswinkel so bestimmt, dass sich ein Mitnahmeffekt für das einfließende Prozessgas ergibt. Die Eintrittsöffnung 142 kann auch als Lavaldüse ausgebildet sein, d.h. einer Düse, die sich erst verengt und dann wieder erweitert, um eine Beschleunigung der Gase zu erreichen.

Insgesamt bieten das vorgeschlagene Verfahren bzw. die Vorrichtung eine effektive Möglichkeit der Stahlherstellung unter Nutzung von fossiler Energie und ist daher auch für Einsatzorte interessant, die schlecht mit elektrischer Energie versorgt werden.

## Patentansprüche

1. Verfahren zur kontinuierlichen Stahlherstellung unter Einsatz von metallischen Einsatzmaterialien (8), wobei die Einsatzmaterialien (8) in einem oberen Teil eines Einschmelzgefäßes (2) eine Materialsäule formen und vorgewärmt werden, anschließend in einem unteren Teil (9) des Einschmelzgefäßes (2) mit fossilen Brennstoffen (23) geschmolzen werden und das Schmelzgut (16) kontinuierlich in ein Behandlungsgefäß (3) abgeführt wird, in dem die gewünschte Stahlqualität eingestellt wird, wobei in das Einschmelzgefäß (2) von außen durch Eintrittöffnungen (42) in der Gefässwand (7) Gase (22) zur Nachverbrennung der Prozessgase (13) eingeführt werden,
**dadurch gekennzeichnet,**
**dass** die Prozessgase (13) beim Aufsteigen im Einschmelzgefäß (2) stufenweise in übereinander angeordneten Nachverbrennungsebenen (E1-E4) nachverbrannt werden und dass hierzu auch in das Innere einer Einsatzmaterialsäule Nachverbrennungsgase (22) durch einen mittig in die Materialsäule hineinragenden Innenschacht (5) durch Eintrittsöffnungen (21) in der Wandung (20) des Innenschachtes (5) eingeführt werden.

2. Verfahren nach Anspruch 1,
**dadurch gekennzeichnet,**
**dass** die Menge, Art und/oder Zusammensetzung der Nachverbrennungsgase (22) in Abhängigkeit der Eigenschaften der Prozessgase (13) über die Höhe des Einschmelzgefäßes (2) eingestellt werden.

3. Verfahren nach einem der Ansprüche 1 oder 2,
**dadurch gekennzeichnet,**
**dass** die Menge, Art und/oder Zusammensetzung der fossilen Brennstoffe (23) sowie die Position mindestens einer Brennereinrichtung (14), die im Innenschacht (5) verfahrbar angeordnet ist, in Abhängigkeit der Eigenschaften der Prozessgase über die Höhe des Einschmelzgefäßes (2) eingestellt werden.

4. Verfahren nach einem der Ansprüche 1 bis 3,
**dadurch gekennzeichnet,**
**dass** die Nachverbrennungsebenen durch Veränderung der Anordnung des Innenschachtes (5) zum Einschmelzgefäß (2) in der Höhe und/oder durch Drehung des Innenschachtes (5) um seine Längsachse eingestellt werden.

5. Verfahren nach einem der Ansprüche 1 bis 4,
**dadurch gekennzeichnet,**
**dass** die Verteilung der Nachverbrennungsgase (22) auf die einzelnen Nachverbrennungsebenen (E1-E4) so eingestellt wird, dass ein lokales Überhitzen der Oberfläche des Einsatzmaterials oberhalb von 90% der Schmelztemperatur des eine Oxidationsschicht bildenden Eisenoxyds vermieden wird und dass der Nachverbrennungsgrad am oberen Austritt aus dem Einschmelzgefäß etwa 100% beträgt.

6. Verfahren nach einem der Ansprüche 1 bis 6,
**dadurch gekennzeichnet,**
**dass** als Prozessgase (13) neben den Einschmelzabgasen auch die bei der Einstellung der Stahlqualität im Behandlungsgefäß (3) entstehenden Bearbeitungsabgase, die durch eine Verbindung der Gasräume der Gefäße (2, 3) in den unteren Teil des Einschmelzgefäßes (2) strömen, während des Aufsteigens im Einschmelzgefäß die Einsatzmaterialien (8) vorwärmen und stufenweise nachverbrannt werden.

7. Verfahren nach einem der Ansprüche 1 bis 6,
**dadurch gekennzeichnet,**
**dass** die für die Bearbeitung der Schmelze (16) im Behandlungsgefäß (3) notwendige Energie wenigstens zu einem Teil durch fossile Brennstoffe eingebracht wird.

8. Verfahren nach einem der Ansprüche 1 bis 7,
**dadurch gekennzeichnet,**
**dass** die Nachverbrennungsgase (22) und/oder die für das Einschmelzen notwendigen Gase vorgewärmt werden.

9. Verfahren nach einem der Ansprüche 1 bis 8,
**dadurch gekennzeichnet,**
**dass** mindestens ein Teil der nachzuverbrennenden Prozessgase (113) abgezogen wird und deren Nachverbrennung außerhalb der Einsatzmaterialsäule stattfindet und die nachverbrannten Prozessgase (113') anschließend wieder in die Einsatzmaterialsäule auf eine höher liegenden Ebene als die Abzugsebene zurückgeführt werden.

10. Verfahren nach Anspruch 9,
**dadurch gekennzeichnet,**
**dass** die Prozessgase (113) zur Nachverbrennung in entlang der Gefäßwand (107) des Einschmelzgefäßes oder außerhalb des Einschmelzgefäßes und/oder in der Innenschachtwand oder innerhalb des Innenschachtes angeordneten Nachverbrennungsräume (146) geführt wird und in diese Nachverbrennungsräume (146) die Nachverbrennungsgase (122) eingeführt werden.

11. Verfahren nach Anspruch 10,
**dadurch gekennzeichnet,**
**dass** die Nachverbrennungsgase (122) in die Nachverbrennungsräume (146) gezielt mit einer Injektor-Wirkung eingeführt werden.

12. Verfahren nach einem der Ansprüche 1 bis 11,
**dadurch gekennzeichnet,**
**dass** die Verbrennung der fossilen Brennstoffe (23) zur Aufschmelzung der Einsatzmaterialien unterstöchiometrisch erfolgt.

13. Vorrichtung (1) zur kontinuierlichen Herstellung von Stahl unter Einsatz von metallischen Einsatzmaterialien (8), umfassend ein Einschmelzgefäß (2) mit mindestens einer die metallischen Einsatzmaterialien in einem unteren Teil (9) des Einschmelzgefäß (2) beaufschlagbaren Brennereinrichtung (14) für fossile Brennstoffe (23) sowie ein mit dem unteren Teil (6) des Einschmelzgefäßes (2) über eine Abstichöffnung (10) verbundenes Behandlungsgefäß (3), in das das Schmelzgut (16) kontinuierlich abgeführt wird und in dem dem die gewünschte Stahlqualität eingestellt wird, wobei die Einsatzmaterialien (8) in einem oberen Teil des Einschmelzgefäßes (2) eine Materialsäule formen und mittels der Prozessgase (13) vorgewärmt werden und in das Einschmelzgefäß (2) von außen durch Eintrittsöffnungen (42) in der Mefässwand (7) Gase (22) zur Nachverbrennung der Prozessgase (13) eingeführt werden,
**dadurch gekennzeichnet,**
**dass** das Einschmelzgefäß (2) mittig einen hohlen Innenschacht (5) aufweist, der längs der Längsachse des Einschmelzgefäßes (2) in dieses von oben hineinragt und
**dass** der Innenschacht (5) in seine Wandung (20) eingebrachte Eintrittsöffnungen (21) zur Einführung von Nachverbrennungsgasen (22) aufweist, die entlang des Innenschaftmantels übereinander angeordnet sind zur stufenweisen Nachverbrennung der Prozessgase (13) in übereinander angeordneten Nachverbrennungsebenen (E1-E4).

14. Vorrichtung nach Anspruch 13,
**dadurch gekennzeichent,**
**dass** sie Mittel (35) zur Bestimmung der Prozessgaseigenschaften über die Höhe des Einschmelzgefäßes (2) und Mittel (39) zur Einstellung der Art, Menge und Zusammensetzung der Nachverbrennungsgase (22) für eine stufenweise Nachverbrennung der Prozessgase (13) mit einem bestimmten Nachverbrennungsgrad umfasst.

15. Vorrichtung nach Anspruch 13 oder 14,
**dadurch gekennzeichnet,**
**dass** entlang des Umfangs des Innenschaftes (5) jeweils auf bestimmten Höhen eine Mehrzahl von Eintrittsöffnungen (21) mit separaten Zuführleitungen (18) für Nachverbrennungsgase (22) angeordnet ist.

16. Vorrichtung nach einem der Ansprüche 13 bis 15,
**dadurch gekennzeichnet,**
**dass** die auf einer jeweiligen Ebene (E3, E4) angeordneten Eintrittsöffnungen (42) des Einschmelzgefäßes (2) im Verhältnis zu zwei untereinander angeordneten Ebenen (E1, E2) von Eintrittsöffnungen (21) des Innenschachtes (5) versetzt angeordnet sind.

17. Vorrichtung nach einem der Ansprüche 13 bis 16,
**dadurch gekennzeichnet,**
**dass** Mittel (40) zum Verstellen des Innenschachts längs der Längsachse des Einschmelzgefäßes (2) und/oder Mittel (41) zur Drehung des Innenschachtes (5) um seine Längsachse vorgesehen sind.

18. Vorrichtung nach einem der Ansprüche 13 bis 17,
**dadurch gekennzeichnet,**
**dass** der Innenschaft (5) an seinem in die Einsatzmaterialsäule (8) ragenden Ende (15) mindestens eine Brennereinrichtung (14) aufweist.

19. Vorrichtung nach einem der Ansprüche 13 bis 18,
**dadurch gekennzeichnet,**
**dass** Mittel (43) zum Verstellen der jeweiligen Brennereinrichtung (14) innerhalb des Innenschachtes (5) vorgesehen sind und Mittel (39) zur Einstellung der Art, Menge und Zusammensetzung der fossilen Brennstoffe (23) und Oxydanten.

20. Vorrichtung nach einem der Ansprüche 13 bis 19,
**dadurch gekennzeichnet,**
**dass** der Innenschacht (5) Zuführleitungen (19) zur Heranführung der fossilen Brennstoffe (23) und Oxydanten an die jeweiligen Brennereinrichtungen (14) aufweist.

21. Vorrichtung nach einem der Ansprüche 13 bis 20,
**dadurch gekennzeichnet,**
**dass** ein oberes Gefäßteil (12) des Behandlungsgefäßes (3) eine Gasaustrittsleitung aufweist, die gasdicht mit dem unteren Teil (6) des Einschmelzgefäßes in Verbindung steht, wobei die bei der Einstellung der Stahlqualität im Behandlungsgefäß (3) entstehenden Prozessgase (13) in den unteren Teil des Einschmelzgefäßes (2) strömen und während des Aufsteigens im Einschmelzgefäß die Einsatzmaterialien (8) vorwärmen.

22. Vorrichtung nach einem der Ansprüche 13 bis 21,
**dadurch gekennzeichnet,**
**dass** die Eintrittsöffnungen (42) in der Gefäßwand (7) des Einschmelzgefäßes (2) zu den im Innenschacht (5) angeordneten Eintrittsöffnungen (21) in einem Winkelversatz bis zu 0,5ϕ angeordnet sind, wobei ϕ der Winkel zwischen zwei nebeneinander angeordneten Eintrittsöffnungen (42) in der Gefäßwand (7) in einer Nachverbrennungsebene mit dem Zentrum des Innenschachtes als Scheitel ist.

23. Vorrichtung nach einem der Ansprüche 13 bis 22,
**dadurch gekennzeichnet,**
**dass** zur Nachverbrennung die Prozessgase (113) außerhalb der Einsatzmaterialsäule angeordnete Nachverbrennungsräume (146) entlang der Gefäßwand (107) des Einschmelzgefäßes oder außerhalb des Einschmelzgefäßes und/oder in der Innenschachtwand oder innerhalb des Innenschachtes angeordnet sind, wobei die Eintrittsöffnungen (142) für die Nachverbrennungsgase (122) bzw. die Oxydanten in die Verbrennungsräume (146) münden.

24. Vorrichtung nach einem der Ansprüche 13 bis 23,
**dadurch gekennzeichnet,**
**dass** sie ein Wärmeaustauschaggregat (24) aufweist, durch das die die Nachverbrennung unterstützenden Gase (22) sowie die Gase (23) für die Brenneinrichtungen (14) im Gegenstrom zu den heißen Abgasen (13) fließen.

25. Vorrichtung nach einem der Ansprüche 13 bis 24,
**dadurch gekennzeichnet,**
**dass** das Behandlungsgefäß (3) so ausgebildet ist, dass es im Ganzen oder als Teil verfahrbar und austauschbar ist und als Puffer für die metallurgische Prozesslinie zwischen Einschmelzgefäß (2) und weiterverarbeitenden Prozessteilen, insbesondere einer Stranggießanlage, dient.

## Claims

1. Method for continuous steel production with use of metallic charge materials (8), wherein the charge materials (8) form a material column in an upper part of a smelting vessel (2) and are preheated, are subsequently melted in a lower part (9) of the smelting vessel (2) with fossil fuels (23) and the molten material (16) is continuously discharged into a treatment vessel (3) in which the desired steel quality is set, wherein gases (22) for post-combustion of the process gases (13) are introduced into the smelting vessel (2) from outside via entry openings (42) in the vessel wall (7), **characterised in that** the process gases (13) when rising in the smelting vessel (2) are post-combusted in steps in post-combustion planes (E1 - E4) arranged one above the other and that for that purpose post-combustion gases (22) are also introduced into the interior of a charge material column through an inner shaft (5), which centrally protrudes into the material column, via entry openings (21) in the wall (20) of the inner shaft (5).

2. Method according to claim 1, **characterised in that** the quantity, kind and/or composition of the post-combustion gases (22) is or are set in dependence on the characteristics of the process gases (13) over the height of the smelting vessel (2).

3. Method according to one of claims 1 and 2, **characterised in that** the quantity, kind and/or composition of the fossil fuels (23) as well as the position of at least one burner device (14), which is movably arranged in the inner shaft (5), are set in dependence on the characteristics of the process gases over the height of the smelting vessel (2).

4. Method according to any one of claims 1 to 3, **characterised in that** the post-combustion planes are set by changing the arrangement of the inner shaft (5) relative to the smelting vessel (2) in height and/or by rotation of the inner shaft (5) about its longitudinal axis.

5. Method according to any one of claims 1 to 4, **characterised in that** the distribution of the post-combustion gases (22) to the individual post-combustion planes (E1 - E4) is so set that a local overheating of the surface of the charge material above 90% of the melting temperature of the iron oxide forming the oxidation layer is avoided and that the degree of post-combustion at the upper outlet from the smelting vessel is approximately 100%.

6. Method according to any one of claims 1 to 6, **characterised in that** as process gases (13), apart from the smelting waste gases, also the processing waste gases, which arise during setting of the steel quality in the treatment vessel (3) and which flow through a connection of the gas spaces of the vessels (2, 3) in the lower part of the smelting vessel (2), preheat the charge materials (8) during the rising in the smelting vessel and are post-combusted in steps.

7. Method according to any one of claims 1 to 6, **characterised in that** the energy required for processing the melt (16) in the treatment vessel (3) is introduced at least in part by fossil fuels.

8. Method according to any one of claims 1 to 7, **characterised in that** the post-combustion gases (22) and/or the gases required for the smelting are preheated.

9. Method according to any one of claims 1 to 8, **characterised in that** at least a part of the process gases (113) to be post-combusted is withdrawn and the post-combustion thereof takes place outside the charge material column and the post-combusted process gases (113') are subsequently fed back again to the charge material column at a plane which lies higher than the withdrawal plane.

10. Method according to claim 9, **characterised in that** the process gases (113) for post-combustion are led into post-combustion spaces (146) arranged along the vessel wall (107) of the smelting vessel or outside the smelting vessel and/or in the inner shaft wall or within the inner shaft and the post-combustion gases (122) are introduced into these post-combustion spaces (146).

11. Method according to claim 10, **characterised in that** the post-combustion gases (122) are selectively introduced into the post-combustion spaces (146) by an injector action.

12. Method according to any one of claims 1 to 11, **characterised in that** the post-combustion of the fossil fuels (23) for melting down the charge materials is carried out sub-stoichiometrically.

13. Device (2) for continuous production of steel with use of metallic charge materials (8), comprising a smelting vessel (2) with at least one burner device (14), which can be acted on by the metallic charge materials in a lower part (9) of the smelting vessel (2), for fossil fuels (23) as well as a treatment vessel (3), which is connected with the lower part (6) of the smelting vessel (2) by way of a tap hole (10) and into which the molten material (16) is continuously discharged and in which the desired steel quality is set, wherein the charge materials (8) form a material column in an upper part of the smelting vessel (2) and are preheated by means of the process gases (13) and gases (22) for post-combustion of the process gases (13) are introduced into the smelting vessel (2) from outside via entry openings (42) in the vessel wall (7), **characterised in that** the smelting vessel (2) has a hollow inner shaft (5) in the centre, which projects from above into the smelting vessel (2) along the longitudinal axis thereof and that the inner shaft (5) has entry openings 21), which are formed in its wall (20), for introduction of post-combustion gases (22), which openings are arranged one above the other along the inner shaft casing for post-combustion in steps of the processes gases (13) in post-combustion planes (E1 - E4) arranged one above the other.

14. Device according to claim 13, **characterised in that** it comprises means (35) for determination of the process gas characteristics over the height of the smelting vessel (2) and means (39) for setting the kind, quantity and composition of the post-combustion gases (22) for a post-combustion in steps of the process gases (13) with a defined degree of post-combustion.

15. Device according to claim 13 or 14, **characterised in that** a plurality of entry openings (21) with separate feed ducts (18) for post-combustion gases (22) is arranged along the circumference of the inner shaft (5) respectively at specific heights.

16. Device according to any one of claims 13 to 15, **characterised in that** the entry openings (42), which are arranged on a respective plane (E3, E4), of the smelting vessel (2) are arranged to be offset relative to two planes (E1, E2), which are arranged thereunder, of entry openings (21) of the inner shaft (5).

17. Device according to any one of claims 13 to 16, **characterised in that** means (40) for adjusting the inner shaft along the longitudinal axis of the smelting vessel (2) and/or means (41) for rotating the inner shaft (5) about its longitudinal axis are provided.

18. Device according to any one of claims 13 to 17, **characterised in that** the inner shaft (5) has at least one burner device (14) at its end (15) protruding into the charge material column (8).

19. Device according to any one of claims 13 to 18, **characterised in that** means (43) for adjusting the respective burner device (14) within the inner shaft (5) are provided and means (39) for setting the kind, quantity and composition of the fossil fuels (23) and oxidisers are provided.

20. Device according to any one of claims 13 to 19, **characterised in that** the inner shaft (5) has feed ducts (19) for the feed of the fossil fuels (23) and oxidisers to the respective burner devices (14).

21. Device according to any one of claims 13 to 20, **characterised in that** an upper vessel part (12) of the treatment vessel (3) has a gas outlet duct which is gas-tightly connected with the lower part (6) of the smelting vessel, wherein the process gases (13) arising during setting of the steel quality in the treatment vessel (3) flow into the lower part of the smelting vessel (2) and preheat the charge materials (8) during rising in the smelting vessel.

22. Device according to any one of claims 13 to 21, **characterised in that** the entry openings (42) in the vessel wall (7) of the smelting vessel (2) are arranged at an angle offset up to 0.5ϕ relative to the entry openings arranged in the inner shaft (5), wherein ϕ is the angle between two mutually adjacent entry openings (42) in the vessel wall (7) in a post-combustion plane with the centre of the inner shaft as apex.

23. Device according to any one of claims 13 to 22, **characterised in that** for the post<-combustion of the process gases (113) post-combustion spaces (146) arranged outside the charge material column are arranged along the vessel wall (107) of the smelting vessel or outside the smelting vessel and/or in the inner shaft wall or within the inner shaft, wherein the entry openings (142) for the post-combustion gases (122) or the oxidisers open into the combustion spaces (146).

24. Device according to any one of claims 13 to 23, **characterised in that** it comprises a heat exchange unit (24) through which the gases (22) assisting the post-combustion as well as the gases (23) for the burner devices (14) flow in counter-flow to the hot waste gases (13).

25. Device according to any one of claims 13 to 24, **characterised in that** the treatment vessel (3) is so constructed that it is movable and exchangeable in its entirely or as a part and serves as a buffer for the metallurgical process line between smelting vessel (2) and subsequent processing parts, particularly a continuous casting plant.

## Revendications

1. Procédé pour la fabrication d'acier continue en utilisant des matériaux de cémentation (8) métalliques, les matériaux de cémentation (8) formant une colonne de matériau dans une partie supérieure d'un récipient de fusion (2) et étant préchauffés et étant fondus ensuite dans une partie inférieure (9) du récipient de fusion (2) avec des combustibles (23) fossiles et l'objet à fondre (16) étant évacué de façon continue dans un récipient de traitement (3), dans lequel la qualité d'acier souhaitée est réglée, des gaz (22) étant introduits dans le récipient de fusion (2) par l'extérieur par des ouvertures d'entrée (42) pratiquées dans la paroi du récipient (7) pour la postcombustion des gaz de procédé (13),
**caractérisé en ce que**
les gaz de procédé (13) sont brûlés ultérieurement lors de la montée dans le récipient de fusion (2) progressivement dans des niveaux de postcombustion (E1-E4) superposés et **en ce que**, à cet effet, des gaz de postcombustion (22) sont introduits à l'intérieur d'une colonne de matériau de cémentation par un puits intérieur (5) dépassant au centre dans la colonne de matériau par des ouvertures d'entrée (21) pratiquées dans la paroi (20) du puits intérieur (5).

2. Procédé selon la revendication 1,
**caractérisé en ce que**
la quantité et la nature et/ou la composition des gaz de postcombustion (22) sont réglées en fonction des propriétés des gaz de procédé (13) sur la hauteur du récipient de fusion (2).

3. Procédé selon l'une quelconque des revendications 1 ou 2,
**caractérisé en que**
la quantité et la nature et/ou la composition des combustibles (23) fossiles et la position d'au moins un dispositif de brûleur (14), qui est disposé de façon déplaçable dans le puits intérieur (5), sont réglées en fonction des propriétés des gaz de procédé sur la hauteur du récipient de fusion (2).

4. Procédé selon l'une quelconque des revendications 1 à 3,
**caractérisé en ce que**
les niveaux de postcombustion sont réglés par la variation de l'agencement du puits intérieur (5) par rapport au récipient de fusion (2) dans la hauteur et/ou par rotation du puits intérieur (5) autour de son axe longitudinal.

5. Procédé selon l'une quelconque des revendications 1 à 4,
**caractérisé en ce que**
la répartition des gaz de postcombustion (22) entre les niveaux de postcombustion (E1-E4) individuels est réglée de telle sorte qu'une surchauffe locale de la surface du matériau de cémentation au-dessus de 90 % de la température de fusion de la couche de l'oxyde de fer formant une couche d'oxydation est évitée et que le degré de postcombustion sur la sortie supérieure du récipient de fusion est d'environ 100 %.

6. Procédé selon l'une quelconque des revendications 1 à 6,
**caractérisé en ce que**,
comme gaz de procédé (13) et parallèlement aux gaz brûlé de fusion, également les gaz de traitement se formant lors du réglage de la qualité d'acier dans le récipient de traitement (3), qui circulent par une liaison des espaces de gaz des récipients (2, 3) dans la partie inférieure du récipient en fusion (2), réchauffent les matériaux de cémentation (8) pendant la montée dans le récipient de fusion et sont brûlés ultérieurement par paliers.

7. Procédé selon l'une quelconque des revendications 1 à 6,
**caractérisé en ce que**
l'énergie nécessaire pour le traitement de la masse fondue (16) dans le récipient de traitement (3) est introduite au moins pour une partie par des combustibles fossiles.

8. Procédé selon l'une quelconque des revendications 1 à 7,
**caractérisé en ce que**
les gaz de postcombustion (22) et/ou les gaz nécessaires pour la fusion sont réchauffés.

9. Procédé selon l'une quelconque des revendications 1 à 8,
**caractérisé en que**
au moins une partie des gaz de procédé (113) à brûler ultérieurement est retirée et leur postcombustion a lieu à l'extérieur de la colonne de matériau de cémentation et les gaz de procédé (113') brûlés ultérieurement sont recyclés ensuite à nouveau dans la colonne de matériau de cémentation sur un niveau plus élevé que le niveau d'extraction.

10. Procédé selon la revendication 9,
**caractérisé en ce que**
les gaz de procédé (113) sont guidés pour la postcombustion dans des espaces de postcombustion (146) disposés le long de la paroi (107) du récipient de fusion ou à l'extérieur du récipient de fusion et/ou dans la paroi du puits intérieur ou à l'intérieur du puits intérieur et les gaz de postcombustion (122) sont introduits dans ces espaces de postcombustion (146).

11. Procédé selon la revendication 10,
**caractérisé en que**
les gaz de postcombustion (122) sont introduits dans les espaces de postcombustion (146) de façon adéquate avec un effet d'injecteur.

12. Procédé selon l'une quelconque des revendications 1 à 11,
**caractérisé en ce que**
la combustion des combustibles (23) fossiles s'effectue de façon sous-stoechiométrique pour la fusion des matériaux de cémentation

13. Dispositif (1) pour la fabrication continue d'acier avec utilisation de matériaux de cémentation (8) métalliques, comprenant un récipient de fusion (2) avec au moins un dispositif de brûleur (14) pouvant être alimenté par les matériaux de cémentation métalliques dans une partie (9) inférieure du récipient de fusion (2) pour des combustibles (23) fossiles et un récipient de traitement (3) relié à la partie (6) inférieure du récipient de fusion (2) par un trou de coulée (10), récipient dans lequel l'objet à fondre (16) est évacué de façon continue et dans lequel la qualité d'acier souhaitée est réglée sur cet objet, les matériaux de cémentation (8) formant une colonne de matériau dans une partie supérieure du récipient de fusion (2) et étant réchauffés au moyen des gaz de procédé (13) et des gaz (22) étant introduits dans le récipient de fusion (2) par l'extérieur par des ouvertures d'entrée (42) pratiquées dans la paroi de récipient (7) pour la combustion ultérieure des gaz de procédé (13),
**caractérisé en ce que**
le récipient de fusion (2) présente au centre un puits intérieur (5) creux, qui dépasse le long de l'axe longitudinal du récipient de fusion (2) dans celui-ci par le haut et
**en ce que** le puits intérieur (5) présente des ouvertures d'entrées (21) introduites dans sa paroi (20) pour l'introduction de gaz de postcombustion (22), qui sont disposées le long de l'enveloppe du puits intérieur les unes au-dessus des autres pour la postcombustion progressive des gaz de procédé (13) dans des niveaux de postcombustion (E1-E4) superposés.

14. Dispositif selon la revendication 13,
**caractérisé en ce que**
il comporte des moyens (35) pour la détermination des propriétés de gaz de procédé sur la hauteur du récipient de fusion (2) et des moyens (39) pour le réglage de la nature, de la quantité et de la composition des gaz de postcombustion (22) pour une postcombustion progressive des gaz de procédé (13) avec un degré de postcombustion défini.

15. Dispositif selon la revendication 13 ou 14,
**caractérisé en que**
une pluralité d'ouvertures d'entrée (21) avec des conduites d'arrivée (18) séparées pour des gaz de postcombustion (22) est disposée le long du pourtour de la tige intérieure (5) respectivement sur certaines hauteurs.

16. Dispositif selon l'une quelconque des revendications 13 à 15,
**caractérisé en que**
les ouvertures d'entrée (42), disposées sur un niveau (E3, E4) respectif, du récipient de fusion (2) sont disposées de façon décalée par rapport à deux niveaux (E1, E2), disposés l'un au-dessus de l'autre, d'ouvertures d'entrée (21) du puits intérieur (5).

17. Dispositif selon l'une quelconque des revendications 13 à 16,
**caractérisé en ce que**
des moyens (40) sont prévus pour le réglage du puits intérieur le long de l'axe longitudinal du récipient de fusion (2) et/ou des moyens (41) pour la rotation du puits intérieur (5) autour de son axe longitudinal.

18. Dispositif selon l'une quelconque des revendications 13 à 17,
**caractérisé en que**
le puits intérieur (5) présente au moins un dispositif de brûleur (14) sur son extrémité (15) dépassant dans la colonne de matériau de cémentation (8).

19. Dispositif selon l'une quelconque des revendications 13 à 18,
**caractérisé en ce que**
des moyens (43) sont prévus pour le déplacement du dispositif de brûleur (14) respectif à l'intérieur du puits intérieur (5) et des moyens (39) pour le réglage de la nature, de la quantité et de la composition des combustibles (23) fossiles et oxydants.

20. Dispositif selon l'une quelconque des revendications 13 à 19,
**caractérisé en ce que**
le puits intérieur (5) présente des conduites d'arrivée (19) pour le rapprochement des combustibles (23) fossiles et oxydants des dispositifs de brûleur (14) respectifs.

21. Procédé selon l'une quelconque des revendications 13 à 20,
**caractérisé en ce que**
une partie de récipient supérieure (12) du récipient de traitement (3) présente une conduite de sortie de gaz, qui est en liaison de façon étanche au gaz avec la partie (6) inférieure du récipient de fusion, les gaz de procédé (13) se formant lors du réglage de la qualité d'acier dans le récipient de traitement (3) circulant dans la partie inférieure du récipient à fusion (2) et réchauffant les matériaux de cémentation (8) pendant la montée dans le récipient de fusion.

22. Dispositif selon l'une quelconque des revendication 13 à 21,
**caractérisé en ce que**
les ouvertures d'entrée (42) dans la paroi du récipient (7) du récipient de fusion (2) sont disposées avec un déport d'angle allant jusqu'à 0,5 ϕ par rapport aux ouvertures d'entrée (21) disposées dans le puits intérieur (5), ϕ étant l'angle entre deux ouvertures d'entrée (42) disposées l'une à côté de l'autre dans la paroi de récipient (7) dans un niveau de postcombustion avec le centre du puits intérieur comme sommet.

23. Dispositif selon l'une quelconque des revendications 13 à 22,
**caractérisé en ce que**
des espaces de postcombustion (146) disposés à l'extérieur de la colonne de matériau de cémentation sont disposés le long de la paroi de récipient (107) du récipient de fusion ou à l'extérieur du récipient de fusion et/ou dans la paroi du puits intérieur ou à l'intérieur du puits intérieur pour la postcombustion des gaz de procédé (113), les ouvertures d'entrée (142) pour les gaz de postcombustion (122) ou les oxydants débouchant dans les espaces de combustion (146).

24. Dispositif selon l'une quelconque des revendications 13 à 23,
**caractérisé en ce que**
il présente un ensemble d'échange de chaleur (24), par lequel les gaz (22) favorisant la postcombustion et les gaz (23) pour les dispositifs de combustion (14) s'écoulent dans le flux contraire au gaz brûlés (13) chauds.

25. Dispositif selon l'une quelconque des revendications 13 à 24,
**caractérisé en que**
le récipient de traitement (3) est conçu de telle sorte qu'il peut être déplacé et échangé dans sa totalité ou partiellement et sert de tampon pour la ligne de procédé métallurgique entre le récipient de fusion (2) et des parties de procédé de traitement ultérieur en particulier une installation d'extrusion.
